# EUROPEAN PATENT APPLICATION

(11) **EP 1 313 294 A1**
(43) Date of publication of application: **21.05.2003**
(21) Application number: 01402897.1
(22) Date of filing: 12.11.2001
(51) Int. Cl.: H04L 29/12, H04L 12/46

(54) **Method for allocating a non-data device to a voice vlan**

(71) Applicant: ALCATEL, 75008 Paris (FR)
(72) Inventor: Bastide, Patrick, 78380 Bougival (FR); Boullet, Marc, 92700 Colombes (FR)
(74) Representative: Lamoureux, Bernard

(57) **Abstract**

A process for allocating a non-data device (12) to a voice VLAN (19), where the non-data device (12) is connected to a default VLAN (20) by means a port (21), the non-data device (12) requests a first address to a first DHCP server (13) and uses of the first address allocated for interacting with a dedicated server (14) to obtain a response containing voice VLAN identifier, following it releases the first address and tags its frames with voice VLAN identifier, then the non-data device (12) requests a second address a second DHCP server (17) associated with the voice VLAN (19).

## Description

### OBJECT OF THE INVENTION

The present invention relates to a method for dynamically assigning addresses in a virtual local area network (VLAN) and, more particularly, to a process for assigning IP addresses to non-data device into a voice VLAN.

### STATE OF THE ART

A non-data device such as IP phones can be connected to a data network such as a LAN infrastructure. However, there is previously that resolve any problem such as to assignee a unique IP addresses in order to communicate with other devices connected to an another systems over a telecommunication network such as the Internet. Due to that there is that building an end-to-end link over the Internet. This end-to-end link includes switches and routers. For instance, switch ports connect the IP phones and data devices to the LAN.

In the LAN is possible to define smaller networks, namely virtual LAN or VLAN, by clustering a plurality of devices of the same type or different type (data/voice) without necessarily changing the physical connections among devices. For instance, data devices reside in data virtual local area networks data VLAN (data subnet) and voice devices reside in voice local area networks voice VLAN (voice subnet).

Therefore, defining a VLAN does not involve changing the physical connections among devices; defining and redefining VLANs is feasible.

It is known from Cisco solution that the voice device, IP phone, and data device can be using different switch ports. Each IP phone requires an IP address with associated information such as subnet, default gateway, and so on. The IP address can be provided by the Dynamic Host Configuration Protocol (DHCP).

According to Cisco solution, the IP phones can be at a separate IP subnet. The new subnet could be in a register address space or in a private address space. Using this scheme, a PC would be on a subnet reserved for data devices and the IP phone would be on a subnet reserved for voice. Configuration on the IP phone can be minimised by having the phone learn as much information dynamically as possible. Therefore, when the IP phone is powered up and plugged into the switch the IP phone get its voice VLAN automatically, then send a DHCP request on that voice VLAN for an IP address.

The automated mechanism by which the IP phone gets its voice VLAN is provided through enhancements to the Cisco Discovery Protocol (CDP), that includes a protocol that sends periodic messages to a multicast address and in turn listens to the periodic messages sent by others devices. The devices obtain information such as native VLAN of interconnected ports, protocols used, and so on.

Also the IP phone uses CDP to interact with the switch port so that the switch port knows that an IP phone is connected to it. The CPD introduces a voice VLAND identifier WID for communicating the voice subnet to the IP phone. This is the voice VLAN that the switch assigns to the IP phone inside the CPD message that was introduced with release 5.5 of the Catalyst software provided by CISCO.

The IP phone to get its VLAN ID automatically when it is plugged into the switch if a VLAN is configured for the phone. If no VLAN is configured for the IP phone, the phone resides in the default VLAN (data subnet) of the switch port. This is why IP Phones use CDP to interact with the switch port so that the switch port knows that an IP phone is connected to it.

The automated mechanism by which the IP phone gets its voice VLAN is provided through Cisco Discovery Protocol CDP that is a device discovery protocol that runs on all Cisco equipment.

Unfortunately, one problem which has arisen in the prior art is that it is desirable to couple devices on a VLAN even though those devices have been designed or configured for different manufacturer equipment, VLAN transport protocols or technologies.

In view of the foregoing, there is a need for simplifying the task of assigning IP addresses to devices operating in a LAN environment with multiple different VLANs and multiple different VLAN technologies.

### CHARACTERISATION OF THE INVENTION

The technical problems mentioned above are resolved by the invention by constituting a process for allocating a non-data device to a voice VLAN coupled to a network, where the non-data device requests a first address to a first server associated to a default VLAN.

The non-data device and a dedicated server use the first address for exchanging set-up parameters and further the non-data device obtains a response contains a voice VLAND identifier corresponding to the first address from the dedicated server.

Following, the non-data device adds tags associated to voice VLAN identified to its frame and releases the first address. Then, the non-data device requests a second address to a second server associated to a voice VLAN.

An aspect of the present invention involves utilising standard protocols, independently of the switch port manufacturer. Other aspect of the invention includes solving the problem of the lack IP address in customer's address space. This aspect of the invention permits guaranty service quality giving high priority to voice VLAN. Furthermore, the invention allows VoIP communications between users who belong to different data VLANs.

### BRIEF DESCRIPTION OF THE DRAWINGS

A more detailed explanation of the invention is given in the following description based on the attached drawings in which:

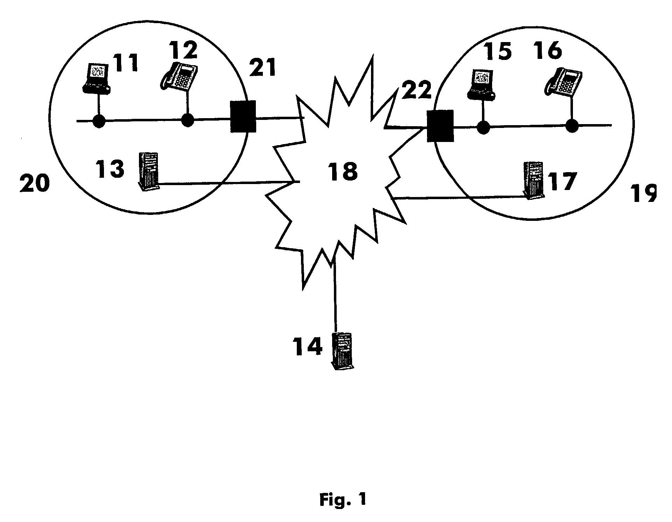

- Figure 1 is a diagram of a network having multiple VLANs according to the invention.

### DESCRIPTION OF THE INVENTION

Figure 1 depicts a several devices such as computers or PC 11, 15; servers 13, 14, 17; and non-data devices 12, 16 which are connected by means of an interconnected network 18.

These devices as non-data devices such as IP phones 12, 16; computers 11, 15 are assigned to different virtual local area networks VLAN 19, 20 by means of ports 21, 22 which are coupled via the network 18. Several devices 11, 12 can be connected to the same port 21. Each device 11 has its own IP address.

The port 21 belongs to a single VLAN 20 and can be member of several VLANs such as a default VLAN, voice VLAN, data VLAN, and so on. The port 21 belongs at least to one default VLAN 20.

When the IP phone 11 is powered up and plugged into default VLAN 20, the IP phone 11 has no one IP address. Due to that the IP phone 11 can not transmit and receive frames or packets, this mean data traffic.

If the IP phone 11 wishes to establish a communication with other non-data device belong to its VLAN 20 or to other VLAN 19, the IP phone 11 must obtain one IP address with that tags its transmitted frames. This tag identifies the VLAN 20 from which the frames are transmitted.

Therefore, the network traffics appearing on any given port belong to a single VLAN. So, frames received on a given port 21 are either tagged with a VLAN identifier related to an IP address; in this case the traffic belongs to this VLAN 20; or not tagged, in this case the traffic belongs to the default VLAN 20 of the port 21.

Therefore, firstly the IP phone 11 sends a Dynamic Host Control Protocol request to a DHCP server 13 to get an IP address. This DCHP server 13 manages a range of IP addresses that can be assigned to devices that belong to the VLAN 20. This range of the IP addresses is called an IP subnet. The same IP address can be assigned to different devices at different times.

When the DHCP request has been received in the first DHCP server 13, this chooses an available IP address among the IP addresses allocated to the subnet corresponding to the default VLAN 20 of the port 21 from which has been originated the DHCP request. This IP address and its associated VLAN identifier do not correspond with a voice VLAN since the default VLAN 20 has been introduced by the port 21 on which the IP phone 12 is connected.

When the IP phone 12 received its first IP address assigned from the DHCP serve 13 that manages the default VLAN 20, the IP phone 12 is switched to the assigned IP address. Furthermore, the first IP address assigned is used by the IP phone 12 for performing a set-up parameters interchange process with a call server 14 on the network 18.

This is the IP phone 12 uses its first IP address to interact with the call server 14 to obtain a response contains the voice VLAN identifier WID on a voice VLAN.

Once obtained the voice VLAN identifier WID, the IP phone 12 releases the first IP address so that this IP address can be assigned to another device belongs to the VLAN 20. And also, the IP phone 12 starts tagging all frames with voice VLAN identifier WID related to the voice VLAN.

In the event that the IP phone 12 wishes communicate with an IP phone 16 belongs to other voice VLAN 19. The IP phone 12 sends a DHCP request to a voice DHCP sever 17 corresponding to the voice VLAN 19 to get a second IP address relating to this voice VLAN 19. The voice DHCP server 19 provides a second IP address to the IP phone 12 relating to the voice VLAN 19.

When the IP phone 12 received its second IP address assigned from the voice DHCP serve 17, the IP phone 12 is switched to the second IP address. Starting from now, the IP phone 12 is coupled by network 18 and its links to the VLAN 19 reserved for voice.

The IP phone 12 is ready to make and receive calls into the voice VLAN 19. Due to fact that the IP phone 12 tags all its frames with the voice VLAN identifier VVID relating to this voice VLAN 19. This means that the frame is tagged with the appropriate outgoing tag to indicate the voice VLAN 19. Previously, the tags relating to the first IP addresses are replaces with tags corresponding to the second IP address. The latter tag is identified by the port 22 coupled the destination non-data device 16 to which the frame is routed.

This invention provides technique to assignee IP address which can be defined without necessarily changing the physical connection in the network 18.

## Claims

1. **Method for allocating** a non-data device to a voice VLAN coupled to a network (18), the non-data device (12) is coupled to network (18) through a port (21) that relates to a default VLAN (20); **characterised in that** the method comprising the steps, a)requesting a first address from the non-data device (12) to a first server (13) associated to the default VLAN (20), b)using of the first address for exchanging set-up parameters between the non-data device (12) and a dedicated server (14), and further to obtain a response contains a voice VLAN identifier corresponding to the first address from the dedicated server (14), c)adding tags associated to voice VLAN identified to frame relates to the non-data device (12), d)requesting a second address from the non-data device (12) to a second server (17) associated to a voice VLAN (19).

2. **Method for dynamically allocating** according to claim 1; **characterised in that** the method comprises the step of releasing the first address before requesting the second address.

3. **Method for dynamically allocating** according to claim 2; **characterised in that** the method comprises the step of adding tags associated to voice VLAN identified associated to the second address.

4. **Non-data device** coupled to network (18) through a port (21) that relates to a default VLAN (20); **characterised in that** the non-data device (12) is adapted to request a first address to a first server (21) associated to the default VLAN (20), to use the first address to interact with a dedicated server (14) and further to obtain a response contains a voice VLAN identifier from the dedicated server (14), to add tags associated to voice VLAN identified allocated to a frame relates to the non-data device (12), to request a second address from the non-data device (12) to a second server (19) associated to a second voice VLAN.

5. **Non-data device** according to claim 4; **characterised in that** the non-data device (12) is adapted to release the first IP address before requesting the second IP address.

6. **Non-data device** according to claim 5; **characterised in that** the non-data device (12) is adapted to add tags associated to voice VLAN identifier associated to the second address.

7. **Dedicated server** associated to a network (18); **characterised in that** the dedicated server (14) is adapted to interact with the non-data device (12) for exchanging set-up parameters and sends a response contains a voice VLAN identifier to the non-data device (12).
